# EUROPEAN PATENT APPLICATION

(11) **EP 2 442 459 A1**
(43) Date of publication of application: **18.04.2012**
(21) Application number: 10786248.4
(22) Date of filing: 11.06.2010
(51) Int. Cl.: H04B 7/15, H04W 16/26

(54) **RELAY AMPLIFICATION APPARATUS**

(30) Priority: 12.06.2009 JP 2009141487
(71) Applicant: NTT DOCOMO, INC., Chiyoda-ku Tokyo 100-6150 (JP)
(72) Inventor: ITO, Yasushi, Tokyo 100-6150 (JP); KUMAGAI, Kazuhiro, Tokyo 100-6150 (JP)
(74) Representative: HOFFMANN EITLE
(86) International application number: PCT/JP2010/059958
(87) International publication number: WO 2010/143717

(57) **Abstract**

A repeater equipment 10 according to the present invention includes a receiving unit 12 configured to receive broadcast information transmitted by the radio base station, and a control unit 13 configured to change a frequency band targeted for amplification of the radio signal, adaptively based on the broadcast information. Frequency range information contained in the broadcast information includes a combination of a center frequency and a bandwidth of each of one or more of frequency bands. The control unit 13 adaptively changes the frequency band targeted for amplification of the radio signal by amplifying a radio signal within a frequency band currently in use and decreasing an amplification gain for a radio signal within a frequency band currently not in use, based on the frequency range information.

## Description

### TECHNICAL FIELD

The present invention relates to a repeater equipment configured to amplify a radio signal received from a radio base station and then retransmit the radio signal in downlink.

### BACKGROUND ART

Some of known mobile communication systems are provided with repeater equipments each configured to amplify a radio signal received from a radio base station and then reradiate the radio signal in a downlink.

### CITATION LIST

### NON-PATENT LITERATURE

Non-patent literature: 3GPP TS36.106

### SUMMARY OF THE INVENTION

However, a repeater equipment has a problem of amplifying noise in frequency bands currently not in use as well as a desired radio signal.

For this reason, the invention has been made in view of the foregoing problem. Accordingly, an objective of the present invention is to provide a repeater equipment capable of amplifying and reradiating only radio signals in a desired frequency band without amplifying noise in frequency bands currently not in use.

The feature of the present invention is summarized in that a repeater equipment configured to amplify a radio signal received from a radio base station and then reradiate the radio signal in a downlink, the repeater equipment including a receiving unit configured to receive broadcast information transmitted by the radio base station, and a control unit configured to change a frequency band targeted for amplification of the radio signal, adaptively based on the broadcast information, wherein frequency range information contained in the broadcast information includes a combination of a center frequency and a bandwidth of each of one or more of frequency bands, and the control unit adaptively changes the frequency band targeted for amplification of the radio signal by amplifying a radio signal within a frequency band currently in use and decreasing an amplification gain for a radio signal within a frequency band currently not in use, based on the frequency range information.

### BRIEF DESCRIPTION OF THE DRAWINGS

[Fig. 1] Fig. 1 is an entire configuration diagram of a mobile communication system according to a first embodiment of the invention.
[Fig. 2] Fig. 2 is a functional block diagram of a repeater equipment according to the first embodiment of the invention.
[Fig. 3] Fig. 3 is a table showing one example of broadcast information received by the repeater equipment according to the first embodiment of the invention.
[Fig. 4] Fig. 4 is a drawing for illustrating a state where a frequency bandwidth targeted for amplification is adaptively changed in the repeater equipment according to the first embodiment of the invention.
[Fig. 5] Fig. 5 is a flowchart for illustrating an operation of the repeater equipment according to the first embodiment of the invention.

### MODE FOR CARRYING OUT THE INVENTION

### (Configuration of a mobile communication system according to a first embodiment of the invention)

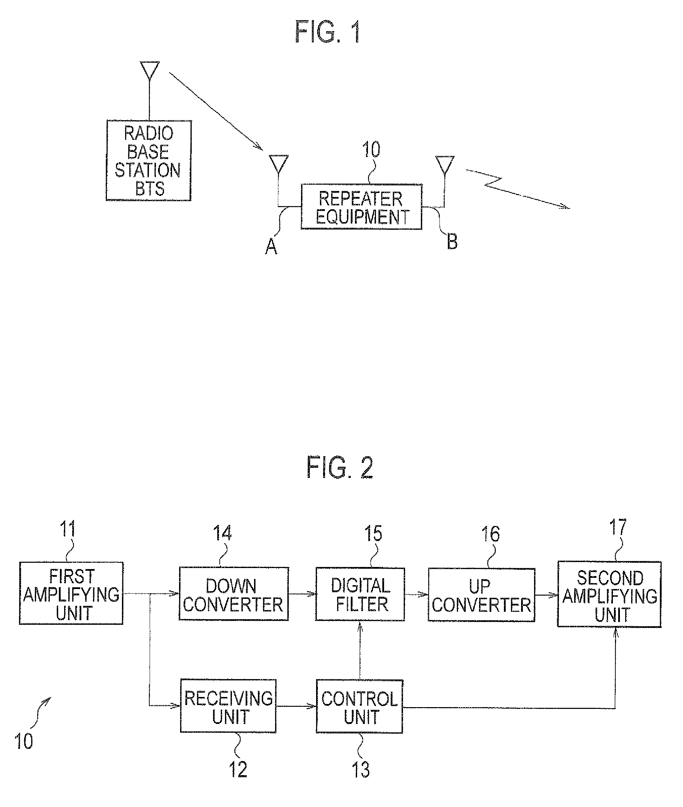

Referring to Figs. 1 to 4, the configuration of a mobile communication system according to a first embodiment of the invention is described.

As shown in Fig. 1, the mobile communication system according to the embodiment is provided with a repeater equipment 10 configured to amplify a radio signal received from a radio base station BTS via a first antenna A and then reradiate the radio signal in a downlink via a second antenna B.

Here, in the mobile communication system according to the embodiment, mobile communications in multiple kinds of communication systems are performed. Thus, the repeater equipment 10 is configured to amplify radio signals received from a radio base station BTS in multiple kinds of communication systems and then reradiate the radio signals in a downlink.

For example, the mobile communication system according to the embodiment performs the W-CDMA system mobile communication and LTE (Long Term Evolution) system mobile communication.

As shown in Fig. 2, the repeater equipment 10 according to the embodiment includes a first amplifying unit 11, a receiving unit 12, a control unit 13, a down converter 14, a digital filter 15, an up converter 16, and a second amplifying unit 17.

Here, the first amplifying unit 11 is configured to amplify a radio wave (radio signal) received from the radio base station BTS via the first antenna A.

The down converter 14 is configured to convert an output signal from the first amplifying unit 11 to a baseband signal.

The digital filter 15 is configured to perform filtering processing on the output signal from the down converter 14.

The up converter 16 is configured to convert an output signal from the digital filter 15 to a radio signal.

The second amplifying unit 17 is configured to amplify an output signal from the up converter 16 and reradiate the amplified output signal to a downlink via the second antenna.

The receiving unit 12 is configured to receive broadcast information contained in the radio wave (radio signal) received from the radio base station BTS via the first antenna A and amplified by the first amplifying unit 11, and then transmit frequency range information contained in the broadcast information to the control unit 13.

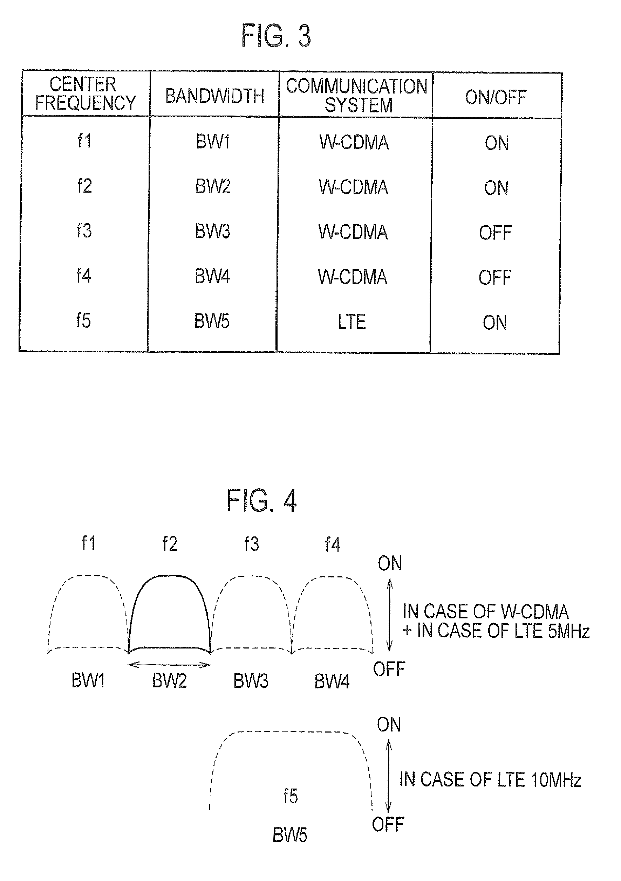

For example, as shown in Fig. 3, the frequency range information includes a combination of "center frequency," "bandwidth," "communication systems," and "ON/OFF" for each of one or more frequency bands.

Here, the "ON/OFF" indicates a usage state showing whether or not the frequency band is in use. Note that if the frequency band is not in use, the frequency range information might not be transmitted in one possible case. Also, the frequency range information only needs to contain a combination of "center frequency" and "bandwidth" of at least one or more bands. In other words, the frequency range information does not necessarily need to include the "communication system" or "ON/OFF."

Moreover, in another possible case, the frequency range information might not be contained in the broadcast information and the receiving unit 12 might not transmit the frequency range information to the control unit 13. Even in the case where the frequency range information is not broadcasted as described above, the repeater equipment 10, if including a receiving unit supporting a communication system used therein, can recognize whether or not the frequency band is in use, by performing reception cell search with the frequency changed that.

According to the frequency range information shown in Fig. 3, it can be seen that a frequency band #1 having "center frequency" of "f1" and "bandwidth" of "BW1" and a frequency band #2 having "center frequency" of "f2" and "bandwidth" of "BW2" are frequency bands for the W-CDMA system mobile communications and are currently used.

Also, according to the frequency range information shown in Fig. 3, it can be seen that a frequency band #3 having "center frequency" of "f3" and "bandwidth" of "BW3" and a frequency band #4 having "center frequency" of "f4" and "bandwidth" of "BW4" are frequency bands for the W-CDMA system mobile communications and are not currently in use.

Furthermore, according to the frequency range information as shown in Fig. 3, it can be seen that a frequency band #5 having "center frequency" of "f5" and "bandwidth" of "BW5" is a frequency band for the LTE system mobile communication and is not currently in use.

For example, from "BW1" to "BW4" may be 5 MHz and "BW5" may be 10 MHz.

Here, for a case where the first amplifying unit 11 receive the broadcast information from multiple neighboring radio base stations BTS, the receiving unit 12 may be configured to receive only the broadcast information transmitted by the radio base station having the smallest propagation loss (path loss) with the repeater equipment 10.

Alternatively, for the case where the first amplifying unit 11 receives the broadcast information from multiple neighboring radio base stations BTS, the receiving unit 12 may be configured to receive only the broadcast information transmitted by the radio base station BTS providing the largest received power of a signal (for example, a pilot signal) received by the repeater equipment 10 via a downlink common control channel (for example, P-CPICH: Physical Common Pilot Channel).

Note that the receiving unit 12 may be configured to periodically receive broadcast information.

Also, the receiving unit 12 may be configured to receive broadcast information transmitted in a predetermined frequency band (for example, the frequency band #2) in a predetermined communication system (for example, W-CDMA system or LTE system) by a predetermined radio base station BTS.

For example, if the radio base station BTS transmits broadcast information in the W-CDMA system, the receiving unit 12 can receive a frequency band in the LTE system indicated as the frequency range information contained in the broadcast information. Specifically, System Information Bock (SIB) 19 in BCH (Broadcast Channel) is used to broadcast the center frequency (EARFCN) and the bandwidth (Measurement Bandwidth) (See, 3GPP T25.331 V8.6.0 SEC. 10.3.7.115).

Instead, the receiving unit 12 can search a radio signal in the W-CDMA system, receive the center frequency and bandwidth of the radio signal currently in use, and receive the frequency range information based on the received center frequency and bandwidth.

In other words, the receiving unit 12 can receive the frequency range information based on the frequency band in which the receiving unit 12 can receive the radio signal in the W-CDMA system, and based on the frequency band in the LTE system contained in the broadcast information. That is to say, the frequency range information contained in the broadcast information needs to include only a communication system (LTE system) other than a communication system receivable by the receiving unit 12 (for example, W-CDMA system).

Note that, if the radio base station BTS broadcasts the frequency band in the W-CDMA system using SIB11 of the BCH, the receiving unit 12 may receive frequency range information in both communication systems contained in the broadcast information. When the receiving unit 12 is a W-CDMA receiver, and even when frequency range information on a frequency different from that of the W-CDMA system is not broadcasted in the SIB11 of the BCH, the receiving unit 12 can identify the frequency range by performing search while changing frequencies receivable by the receiver from one to another.

The control unit 13 is configured to change a frequency band targeted for radio signal amplification adaptively based on the broadcast information received by the receiving unit 12 and the frequency range made receivable as a result of the search.

Specifically, the control unit 13 is configured to adaptively change the frequency band targeted for radio signal amplification by amplifying a radio signal in the frequency band currently in use and decreasing an amplification gain for a radio signal within a frequency band currently not in use.

For example, if the frequency range information shown in Fig. 3 is received, the control unit 13 is configured to adaptively change the frequency band targeted for radio signal amplification by amplifying radio signals in the frequency bands #1, #2, #5 currently in use and decreasing amplification gain for the radio signals in the frequency bands #3, #4 currently not in use, based on the frequency range information.

Specifically, the control unit 13 is configured to adaptively change the frequency band targeted for radio signal amplification by changing a signal form of the digital filter 15.

For example, if the frequency range information shown in Fig. 3 is received, as shown in Fig. 4, the control unit 13 instructs the digital filter 15 to pass the radio signals in the frequency bands #1, #2, #5 and attenuate the radio signals in the frequency bands #3, #4 or to perform filtering processing to cut the radio signals in the frequency bands #3, #4.

Here, the digital filter 15 is configured to perform filtering processing for every 10 MHz in the frequency band #5 and to perform filtering processing for every 5 MHz in the frequency bands #1 to #4.

Also, the control unit 13 may be configured to change the frequency band targeted for radio signal amplification adaptively based on broadcast information transmitted by a radio base station BTS having the smallest propagation loss with the repeater equipment 10.

Furthermore, the control unit 13 may be configured to change the frequency band targeted for radio signal amplification adaptively based on broadcast information transmitted by a radio base station BTS providing the largest received power of a signal (for example, a pilot signal) received by the repeater equipment 10 via a downlink common control channel (for example, P-CPICH).

In addition, the control unit 13 may be configured to change an amplification gain in the second amplifying unit 17 based on the smallest value of the propagation loss.

Also, the control unit 13 may be configured to change an amplification gain in the second amplifying unit 17 so that a signal (for example, a pilot signal) transmitted via the downlink common control channel (for example, P-CPICH) can have power of a constant value.

Furthermore, from among radio signals received in uplink, the control unit 13 may be configured to amplify a radio signal in the frequency band currently in use in the downlink and decrease an amplification gain for a radio signal in the frequency band currently not in use in the downlink.

Also, the control unit 13 may be configured not to amplify a radio signal in the frequency band which is not set in the frequency range information.

### (Operation of the mobile communication system according to the first embodiment of the invention)

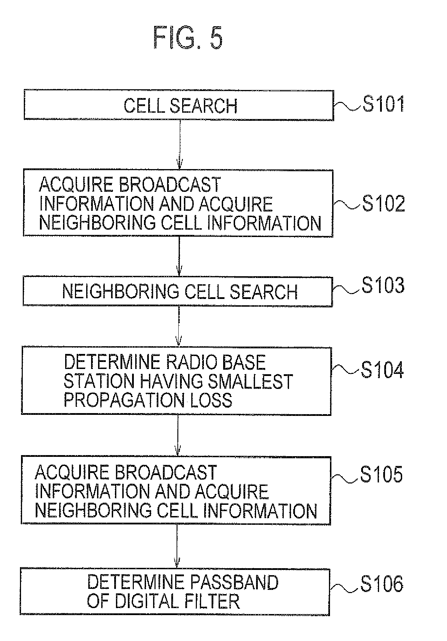

Hereinafter, referring to Fig. 5, the operation of the mobile communication system according to the embodiment, specifically, the operation of the repeater equipment 10 according to the embodiment is described.

As shown in Fig. 5, at step S101, the repeater equipment 10 performs cell search processing, and at step S102, receives broadcast information in a cell detected through the cell search and receives neighboring cell information contained in the broadcast information.

At step S103, the repeater equipment 10 detects propagation loss (path loss) in each of neighboring cells specified by the received neighboring cell information, and at step S104, determines a radio base station (or a cell) having the smallest propagation loss.

At step S105, the repeater equipment 10 receives the broadcast information transmitted by a radio base station (or a cell) having the smallest propagation loss and receives frequency range information contained in the broadcast information.

At step S106, the repeater equipment 10 changes adaptively the frequency band to amplify radio signal based on the frequency range information, that is, determines a passband of the digital filter 15.

### (Advantageous effects of the mobile communication system according to the first embodiment of the invention)

In the mobile communication system according to the first embodiment of the invention, the repeater equipment 10 is operable to amplify only a radio signal in a frequency band currently in use without amplifying a radio signal in a frequency band currently not in use by determining the radio signal as a noise.

In addition, in the mobile communication system according to the first embodiment of the invention, the repeater equipment 10 is capable of changing the passbands of the digital filter 15 for frequency bands near a frequency band operated by the repeater equipment 10 itself, based on the frequency range information, and thereby amplifying and reradiating radio signals in these frequency bands.

In particular, in the mobile communication system according to the first embodiment of the invention, under the environment in which multiple communication systems, for example, the W-CDMA system mobile communication and the LTE system mobile communication coexist, there is no need that both a W-CDMA system receiving unit 12 and an LTE system receiving unit 12 are provided in the repeater equipment 10.

Specifically, the W-CDMA system receiving unit 12 (or the LTE system receiving unit 12) receives a frequency band for the W-CDMA system mobile communication (or a frequency band for the LTE system mobile communication) by searching a radio signal and the repeater equipment 10 changes the passbands of the digital filter 15 for the W-CDMA system frequency band and the LTE system frequency band, based on the LTE system frequency range information contained in the broadcast information. Thereby, the repeater equipment 10 can amplify and reradiate both a signal for the W-CDMA system mobile communication and a signal for the LTE system mobile communication. Incidentally, if the broadcast information contains the frequency range information for both communication systems as described above, the receiving unit 12 may receive the frequency range information based on the broadcast information. Even in this case, there is no need that both the W-CDMA system receiving unit 12 and the LTE system receiving unit 12 are provided.

In addition, in the mobile communication system according to the first embodiment of the invention, the repeater equipment 10 can change the passband of the digital filter 15 in consideration of the bandwidths indicated in the frequency range information, and accordingly can correctly reradiate radio signals having different frequency bands like the W-CDMA system frequency band and the LTE system frequency band.

Furthermore, in the mobile communication system according to the first embodiment of the invention, the repeater equipment 10 is configured to periodically receive the broadcast information, and thus can properly change the passband of the digital filter 15 when the frequency range information is changed.

Also, in the mobile communication system according to the first embodiment of the invention, the repeater equipment 10 recognizes the operating state within the frequency band by using the broadcast information. Accordingly, when signals in multiple systems are inputted in the same frequency band, the repeater equipment 10 only needs to receive one system signal at the one frequency, without multiple system receivers, to discriminate between a frequency band targeted for amplification and a frequency band targeted for amplification gain decrease.

In addition, in the mobile communication system according to the first embodiment of the invention, a processing speed for implementing the above function can be made faster.

Here, if the repeater equipment 10 determines a frequency band to amplify only based on a received level, such an error may be caused that interference signal or the like is wrongly amplified. However, if a frequency band targeted for amplification can be determined based on the broadcast information, such error can be avoided.

The characteristics of the embodiment as described above can be expressed as follows.

A first characteristic of the embodiment is a repeater equipment 10 configured to amplify a radio signal received from a radio base station BTS and then reradiate the radio signal in a downlink. The repeater equipment 10 is summarized by including a receiving unit 12 to receive broadcast information transmitted by the radio base station BTS, and a control unit 13 to change a frequency band targeted for radio signal amplification, adaptively based on the broadcast information.

In the first characteristic of the embodiment, the frequency range information includes a combination of a center frequency and a bandwidth of each of one or more frequency bands, and a control unit 13 may be configured to adaptively change the frequency band targeted for radio signal amplification by amplifying a radio signal within the frequency band currently in use and decreasing an amplification gain for a radio signal within the frequency band currently not in use, based on the frequency range information contained in the broadcast information.

In the first characteristic of the embodiment, the frequency range information includes a combination of a center frequency, a bandwidth, and a usage state ("ON/OFF") of each of one or more frequency bands. Here, the use state indicates whether the frequency band is in used or not. The control unit 13 may be configured to adaptively change the frequency band targeted for radio signal amplification by amplifying a radio signal within the frequency band currently in use and decreasing an amplification gain for a radio signal within the frequency band currently not in use, based on the frequency range information contained in the broadcast information.

In the first characteristic of the embodiment, the control unit 13 may be configured to change the frequency band targeted for radio signal amplification adaptively based on the broadcast information transmitted by the radio base station having the smallest propagation loss (path loss) with the repeater equipment 10.

In the first characteristic of the embodiment, the control unit 13 may be configured to change the frequency band targeted for radio signal amplification adaptively based on the broadcast information transmitted by the radio base station BTS providing the largest received power of a signal received by the repeater equipment 10 via a downlink common control channel.

In the first characteristic of the embodiment, the control unit 13 may be configured to change an amplification gain based on the smallest value of above-described the propagation loss.

In the first characteristic of the embodiment, the control unit 13 may be configured to change the frequency band targeted for radio signal amplification adaptively based on a frequency range receivable by the receiving unit 12.

In the first characteristic of the embodiment, the control unit 13 may be configured to change the amplification gain so that the downlink common control channel output power maintains a constant value.

In the first characteristic of the embodiment, the receiving unit 12 may be configured to periodically receive broadcast information transmitted by the radio base station BTS.

In the first characteristic of the embodiment, from among radio signals received in uplink, the control unit 13 may be configured to amplify a radio signal in a frequency band currently in use in downlink and decrease the amplification gain for a frequency band currently not in use in downlink.

In the first characteristic of the embodiment, the control unit 13 may be configured to change the amplification gain so that P-CPICH (specific channel) of the downlink common control channels can maintain constant output power.

Note that the above described operations of the radio base station BTS and the repeater equipment 10 may be implemented by hardware, may be implemented by a software module executed by a processor, or may be implemented by a combination of both.

The software module may be provided in any type of storage medium such as a RAM (Random Access Memory), a flash memory, a ROM (Read Only Memory), an EPROM (Erasable Programmable ROM), an EEPROM (Electronically Erasable and Programmable ROM), a register, a hard disk drive, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the radio base station BTS and the repeater equipment 10. Also, the storage medium and the processor may be provided in the radio base station BTS and the repeater equipment 10 as a discrete component.

Hereinabove, the present invention has been described in detail using the above embodiment; however, it is apparent to those skilled in the art that the present invention is not limited to the embodiment described herein. Modifications and variations of the present invention can be made without departing from the scope of the present invention defined by the description of the scope of claims. Thus, what is described herein is for illustrative purpose, and has no intention whatsoever to limit the present invention.

Note that the entire content of Japanese Patent Application No. 2009-141487 (filed on June 12, 2009) is incorporated herein by reference.

### INDUSTRIAL APPLICABILITY

According to the present invention, only a desired radio signal can be amplified and reradiated without amplification of nose in a band currently not in use, which is useful in a radio communication or the like.

### EXPLANATION OF REFERENCE NUMERALS

- 10: Repeater equipment
- 11: First amplifying unit
- 12: Receiving unit
- 13: Control unit
- 14: Down converter
- 15: Digital filter
- 16: Up converter
- 17: Second amplifying unit

## Claims

1. A repeater equipment configured to amplify a radio signal received from a radio base station and then reradiate the radio signal in a downlink, the repeater equipment comprising:
a receiving unit configured to receive broadcast information transmitted by the radio base station; and
a control unit configured to change a frequency band targeted for amplification of the radio signal, adaptively based on the broadcast information, wherein
frequency range information contained in the broadcast information includes a combination of a center frequency and a bandwidth of each of one or more of frequency bands, and
the control unit adaptively changes the frequency band targeted for amplification of the radio signal by amplifying a radio signal within a frequency band currently in use and decreasing an amplification gain for a radio signal within a frequency band currently not in use, based on the frequency range information.

2. The repeater equipment according to claim 1, wherein
the receiving unit receives broadcast information with a plurality of frequencies transmitted by the radio base station, and
the control unit adaptively changes the frequency band targeted for amplification of the radio signal by amplifying a radio signal within a frequency band currently in use and decreasing an amplification gain for a radio signal within a frequency band currently not in use, based on a frequency receivable by the receiving unit.

3. The repeater equipment according to claim 1, wherein
the frequency range information includes a combination of a center frequency, a bandwidth and a usage state of each of one or more frequency bands, the usage state indicating whether the frequency band is in use or not, and
the control unit adaptively changes the frequency band targeted for amplification of the radio signal by amplifying a radio signal within a frequency band currently in use and decreasing an amplification gain for a radio signal within a frequency band currently not in use, based on the frequency range information contained in the broadcast information.

4. The repeater equipment according to any one of claims 1 to 3, wherein the control unit changes the frequency band targeted for amplification of the radio signal, adaptively based on broadcast information transmitted by a radio base station having the largest propagation loss with the repeater equipment.

5. The repeater equipment according to any one of claims 1 to 3, wherein the control unit adaptively changes a frequency band targeted for amplification of the radio signal based on broadcast information transmitted by a radio base station providing the largest received power of a signal received by the repeater equipment via the downlink common control channel.

6. The repeater equipment according to claim 4, wherein the control unit changes the amplification gain based on the smallest value of the propagation loss.

7. The repeater equipment according to claim 5, wherein the control unit changes the amplification gain so that a signal transmitted via the downlink common control channel has power of a constant value.

8. The repeater equipment according to any one of claims 1 to 7, wherein the receiving unit periodically receives broadcast information transmitted by the radio base station.

9. The repeater equipment according to claim 1, wherein, from among radio signals received via an uplink, the control unit amplifies a radio signal in the frequency band currently in use and decreases an amplification gain for a radio signal in the frequency band currently not in use.

10. The repeater equipment according to claim 5, wherein the control unit changes the amplification gain so that a specific channel of the downlink common control channels provides constant output.
